# FASCICULE DE BREVET EUROPEEN

(11) **EP 2 232 325 B1**
(45) Date de publication et mention de la délivrance du brevet: **25.05.2011**
(21) Numéro de dépôt: 09745923.4
(22) Date de dépôt: 08.01.2009
(51) Int. Cl.: G02F 1/13357, G02F 1/1334, G02F 1/139, G02B 27/01, G02B 27/02, G02C 7/10

(54) **COMPOSANT TRANSPARENT À ÉLÉMENTS RÉFLÉCHISSANTS COMMUTABLES, ET DISPOSITIFS COMPRENANT UN TEL COMPOSANT**
TRANSPARENTE KOMPONENTE MIT UMSCHALTBAREN REFLEXIONSELEMENTEN SOWIE GERÄTE MIT EINER SOLCHEN KOMPONENTE
TRANSPARENT COMPONENT WITH SWITCHABLE REFLECTING MEMBERS, AND DEVICES INCLUDING SUCH COMPONENT

(30) Priorité: 11.01.2008 FR 0850153
(43) Date de publication de la demande: 29.09.2010
(73) Titulaire: Essilor International (Compagnie Générale D'Optique), 94220 Charenton le Pont (FR)
(72) Inventeur: BOVET, Christian, F-94220 Charenton-Le-Pont (FR); CANO, Jean Paul, F-94220 Charenton-Le-Pont (FR)
(74) Mandataire: Cabinet Plasseraud
(86) Numéro de dépôt international: PCT/FR2009/050016
(87) Numéro de publication internationale: WO 2009/138604

(56) Documents cités:
- EP-A- 0 399 506
- EP-A- 1 213 601
- EP-A- 1 876 490
- US-A- 6 118 420

## Description

La présente invention concerne un composant transparent à éléments réfléchissants qui sont commutables, ainsi que des dispositifs qui comprennent un tel composant.

De nombreux composants existent déjà, qui permettent de produire des images en modulant une lumière qui est transmise à travers ces composants de façon variable entre des points différents. De tels composants sont couramment appelés modulateurs de lumière. Ils sont constitués d'éléments actifs qui sont juxtaposés parallèlement à une surface en général plane, et qui sont ajustables entre un état individuel transparent et un état individuel opaque. Chaque élément actif constitue un point d'une image qui est produite par le composant, et est couramment appelé pixel. Ces composants se distinguent par le principe de fonctionnement des éléments actifs. Celui-ci peut être électrophorétique ou à cristaux liquides notamment. Chacun de ces composants doit être associé à une source de lumière pour produire une image en transmettant la lumière de la source à travers les éléments actifs. Il est donc transmissif, mais il n'est pas transparent car il ne permet pas de visualiser une scène qui est située d'un côté du composant pour un observateur qui est situé de l'autre côté du composant. En outre, les images qui sont produites par un composant de ce type sont, par principe, situées à l'intérieur du composant lui-même, au niveau des pixels de celui-ci.

Il existe aussi des composants conçus pour former des images, qui sont constitués chacun d'une matrice de micro-miroirs disposés sur des microsystèmes électromécaniques. Chaque microsystème électromécanique, ou MEMS pour «Mechanic-Electronic MicroSystem» en anglais, commande l'orientation d'un micro-miroir qui réfléchit une partie élémentaire d'un faisceau lumineux vers une optique de projection, ou bien la dévie hors de cette optique. Chaque micro-miroir forme, avec le microsystème qui lui est associé, un pixel de l'image projetée. Ces composants à MEMS, appelés «Digital Light Processor», fonctionnent par réflexion de la lumière qui est produite par une source et ne sont donc pas transparents. Les images qui sont produites par un tel composant à MEMS sont situées au niveau de la matrice des micro-miroirs.

Le document US 6,118,420 décrit des systèmes d'affichage qui sont transparents. Ils permettent de produire des données en surimpression par rapport à une image qui est transmise par transparence. Pour cela, de la lumière est injectée dans les systèmes par leur épaisseur, et les plaques qui portent les électrodes servent de guides pour cette lumière. Des éléments actifs commutent entre un état transparent et un état diffusant pour afficher les données.

Le document EP 1 213 601 concerne un système dans lequel un motif affiché en surimpression par rapport à l'image qui est transmise par transparence, est déterminé initialement par la forme d'une électrode. Le milieu actif est constitué d'inclusions transparentes réparties dans un cristal liquide, et commute à l'endroit du motif entre un état transparent et un état diffusant.

Dans les systèmes de ces deux documents, les données ou les motifs qui sont affichés en surimpression ont un plan d'image qui est situé au niveau du milieu actif, à l'intérieur des systèmes.

Un but de la présente invention consiste à fournir un composant qui est transparent pour permettre d'observer une scène à travers celui-ci sans en dégrader significativement la qualité, et qui est capable de produire simultanément à distance du composant, une image additionnelle indépendante de la scène observée par transparence. Ainsi le composant selon l'invention permet de visualiser en même temps l'image par transparence et l'image additionnelle, cette dernière étant projetée au-delà du composant. La visualisation simultanée des deux images est possible car leurs positions respectives ne nécessitent pas à - un observateur de modifier son accommodation dans une mesure significative, pour voir chacune des images. Dans cette première application de l'invention, l'image additionnelle est projetée en réalisant un balayage d'éléments actifs répartis dans le composant, pour préserver sa transparence.

Un autre but de l'invention consiste à enregistrer une image qui est perçue simultanément par transparence à travers le composant, sans perturber l'observation et la qualité de l'image observée en transparence. Dans cette seconde application de l'invention, des éléments actifs répartis dans le composant sont commutés de façon variable, pour diriger une partie de la lumière de l'image vers un détecteur sans obstruer un endroit du champ de vision de façon permanente. Le composant assure alors une fonction de prise de vue.

Pour cela, l'invention propose un composant transparent selon la revendication 1.

Le système d'adressage est adapté pour qu'un nombre réduit d'éléments actifs soient simultanément dans l'état réfléchissant, de sorte que la première image, représentative de la scène qui est située du premier côté du composant, apparaisse de façon permanente à travers le composant. En effet, la quantité de lumière provenant de la scène qui est occultée ou réfléchie par les éléments actifs qui sont dans l'état réfléchissant n'est pas perceptible par rapport à l'intensité totale de la lumière qui est issue de la scène et qui est transmise à travers le composant. Ainsi dans le cadre de l'invention, les éléments actifs sont assimilables à des lames réfléchissantes ou semi-réfléchissantes, celles-ci pouvant être alternativement transparentes par commutation, et leur agencement au sein du composant leur permet d'être complètement réfléchissantes selon un axe d'observation.

Cette transparence apparente du composant, qui est permanente pendant son utilisation, le rend compatible avec de nombreuses applications. En particulier, le composant peut être incorporé à un pare-brise, un miroir, un verre de fenêtre, un dispositif de prise de vues, un appareil optique, une lentille optique, etc.

Selon l'invention, les moyens de transmission de lumière et les éléments actifs sont disposés pour conjuguer optiquement des points d'un champ optique additionnel qui est situé d'un même côté des moyens de transmission de lumière que l'orifice de passage de la lumière, avec des points respectifs qui sont situés à l'extérieur de et à distance du composant, sur le premier ou le second côté de celui-ci. Autrement dit, le composant fournit une voie optique supplémentaire, en plus de sa transparence entre les deux côtés opposés de celui-ci. Cette voie optique supplémentaire relie le champ optique additionnel à l'un des deux côtés du composant, par conjugaison optique. Pour cela, la réflexion qui est produite par les éléments actifs dans l'état réfléchissant est spéculaire, c'est-à-dire qu'une éventuelle intensité de réflexion diffuse n'est pas significative et ne participe pas à la fonction optique du composant.

Le composant selon l'invention représente donc un dispositif réfléchissant et transparent. Ce dispositif est apte à présenter par réflexion tout ou partie d'une image, celle-ci étant perceptible par transparence au travers du composant. Au sein du composant, les éléments actifs qui le composent présentent ainsi deux fonctions : une fonction de réflexion lumineuse et une fonction de transmission lumineuse, la commutation entre ces deux fonctions étant contrôlée de façon variable par le système d'adressage qui est présent au sein du composant.

Un composant selon l'invention peut en outre être de dimensions réduites. Sa petite taille permet alors de l'intégrer dans un équipement individuel portatif tel qu'un instrument de visualisation, par exemple une paire de jumelles ou un viseur d'appareil photographique, une paire de lunettes, une visière de casque, un verre de masque de protection ou de sport, etc.

Selon un perfectionnement du composant de l'invention, le système d'adressage peut être adapté en outre pour que l'état réfléchissant de certains au moins des éléments actifs soit intermittent, avec une durée finie de l'état réfléchissant de chaque élément actif et avec une fréquence de changement des éléments actifs qui sont commutés. En particulier, les éléments actifs peuvent ainsi être commutés par balayage. Le composant apparaît alors comme étant globalement transparent en tout point de sa surface.

Les éléments actifs peuvent être de différents types, en fonction du principe physique de l'état réfléchissant. Cet état réfléchissant peut être basé notamment sur une réflexion de type miroir métallique ou semi-réfléchissant, ou sur une réflexion par effet de Bragg, ou encore sur un effet de rupture de guide d'onde. Parmi les éléments actifs du type miroir métallique ou semi-réfléchissant, on peut citer ceux à base de cristaux liquides nématiques, ceux à base d'une matrice polymère qui incorpore des gouttelettes dispersées d'un cristal liquide, ceux à déplacement de bulle dans un liquide, ou encore ceux à électromouillage. Les éléments actifs qui comprennent des cristaux liquides cholestériques sont du type à réflexion de Bragg. Enfin, des éléments actifs qui sont basés sur un effet de rupture de guide d'onde peuvent comprendre chacun une portion de guide d'onde et une portion latérale transparente qui sont en contact l'une avec l'autre, la portion latérale ayant un indice de réfraction qui est variable entre deux valeurs respectivement inférieure et supérieure ou égale à la valeur de l'indice de réfraction du guide d'onde.

Grâce à la taille très petite que peuvent avoir de tels éléments actifs, le composant de l'invention peut satisfaire des critères esthétiques exigeants, et notamment ceux d'applications ophtalmiques. De préférence, certains au moins des éléments actifs ont des dimensions qui sont inférieures à 2 mm (millimètre), voire inférieures à 0,5 mm, parallèlement à la surface du composant.

Avantageusement, les éléments actifs peuvent être juxtaposés dans la surface du composant transparent selon un agencement matriciel. Dans ce cas, les moyens de transmission de la lumière peuvent comprendre eux-mêmes des éléments actifs intermédiaires qui sont commutables chacun entre un état individuel transparent et un état individuel réfléchissant, et qui sont disposés chacun entre l'orifice de passage de la lumière et une extrémité d'une ligne ou d'une colonne de l'agencement matriciel. Chaque élément actif intermédiaire peut ainsi établir une connexion optique entre l'orifice de passage de la lumière et l'un des éléments actifs de la colonne ou la ligne correspondante lorsqu'il est dans l'état réfléchissant.

L'invention propose aussi deux dispositifs qui utilisent un composant transparent tel que décrit précédemment, et qui sont destinés à des applications différentes.

Un premier de ces dispositifs permet de superposer deux images différentes. Il comprend, en plus du composant transparent, une source de lumière qui est disposée pour produire de la lumière à travers l'orifice de passage du composant de sorte que cette lumière puisse être réfléchie par l'un au moins des éléments actifs vers le second côté du composant transparent, de façon à former une seconde image d'un motif qui est situé dans le champ optique additionnel, cette seconde image étant visible du second côté du composant et apparaissant superposée à la première image. En particulier, la seconde image n'est pas formée dans le plan du composant mais au-delà du composant. La première image résulte de la transparence apparente du composant. Elle reproduit la scène qui est située du premier côté de ce composant et est visible depuis le second côté. La seconde image est réfléchie par les éléments actifs qui sont dans l'état réfléchissant. Autrement dit, le dispositif permet d'introduire, dans le chemin optique de transmission de la première image à travers le composant, une lumière supplémentaire qui produit la seconde image à l'extérieur du composant. Ainsi dans le cadre de l'invention, le terme superposition d'images doit être entendu comme la coexistence de deux images en dehors du composant, sans qu'aucune des deux images soit située dans le plan du composant. Etant donnée que les deux images sont situées du même premier côté du composant, et visibles à partir du même second côté du composant, elles ne nécessitent pas de déplacement d'un utilisateur du dispositif, ni une variation d'accommodation visuelle importante de sa part, pour percevoir les deux images. Ainsi, les deux images sont visibles simultanément, et sont superposées.

Dans un tel dispositif de superposition d'images, le système d'adressage peut être adapté en outre pour commander successivement des commutations d'éléments actifs différents, de façon à produire la seconde image par balayage des éléments actifs. De plus, la durée de l'état réfléchissant de chaque élément actif et la fréquence de changement des éléments actifs qui sont commutés sont adaptées de sorte que la seconde image apparaisse continue et/ou permanente. Grâce à ce mode d'introduction de la lumière qui produit la seconde image, la visibilité de la première image à travers le composant transparent n'est pas altérée.

Les deux images sont superposées lorsqu'elles sont détectées ou observées du second côté du composant. En particulier, la seconde image, peut apparaître en surimpression par rapport à la première image si l'éclairement qui est produit par la source de lumière est supérieur à celui qui est produit par la scène. La seconde image peut être, par exemple, une mire de visée, une inscription de données alphanumériques, des graphiques, une reproduction d'éléments de tableau de bord, des éléments de communication multimédia, etc.

La durée de l'état réfléchissant de chaque élément actif et la fréquence de changement des éléments actifs qui sont commutés peuvent être adaptées de différentes façons selon le mode de détection des images. En effet, pour que la seconde image apparaisse continue, ces paramètres peuvent être ajustés en fonction d'une durée de rémanence et/ou d'un temps de réponse propres à la détection utilisée. Ainsi, pour des applications telles qu'un verre ophtalmique, un verre de masque, une visière de casque, un viseur oculaire, un pare-brise à affichage pour une vision à tête haute («windscreen with head-up display» en anglais) ou une fenêtre, ils peuvent être ajustés pour un utilisateur du dispositif qui observe les première et seconde images à l'oeil nu. Notamment, la durée entre deux commutations successives d'un même élément actif vers l'état réfléchissant peut être inférieure à la durée de rémanence rétinienne de l'observateur. Dans le cas d'un verre ophtalmique, les éléments actifs peuvent en outre être adaptés pour corriger une amétropie d'un porteur du verre qui observe l'une au moins des première et seconde images.

Pour d'autres applications, telles qu'une lentille optique d'un système d'enregistrement vidéo, ils peuvent être ajustés en fonction d'un temps de réponse d'un détecteur d'image qui est placé du second côté du composant transparent.

Un second dispositif selon l'invention, qui correspond à une application distincte du composant transparent, permet de visionner et d'enregistrer simultanément une même image. Un tel dispositif comprend, en plus du composant transparent :
- un détecteur photosensible, qui est disposé dans le champ optique additionnel du composant pour recevoir, à travers l'orifice de passage du composant, de la lumière qui provient de la scène et qui est réfléchie par l'un au moins des éléments actifs pendant une durée de détection ; et
- une unité d'enregistrement qui est reliée au détecteur de façon à enregistrer des intensités lumineuses reçues par celui-ci,
le système d'adressage étant relié en outre au détecteur et à l'unité d'enregistrement de façon à transmettre à cette dernière des coordonnées d'un élément actif dans la surface du composant transparent, qui est dans l'état réfléchissant pendant la durée de détection, et la durée de l'état réfléchissant de chaque élément actif et la fréquence de changement des éléments actifs qui sont commutés sont adaptées de sorte que la première image formée par le composant apparaisse continue pour un utilisateur du dispositif.

Un tel dispositif de vision et d'enregistrement d'image permet d'orienter vers le détecteur une partie de la lumière qui est produite par la scène située du premier côté du composant, sans que le chemin optique de transmission de la première image à travers le composant soit modifié, ni que l'intensité globale de la première image soit réduite de façon perceptible. La voie optique additionnelle qui est fournie par le composant de l'invention est donc utilisée pour orienter vers le détecteur la partie de la lumière issue de la scène qui est utilisée pour enregistrer l'image de cette scène.

Il peut aussi former une lentille optique, un verre ophtalmique, un verre de masque, une visière de casque, un viseur optique, un pare-brise ou une fenêtre, un système de caméscope, etc. Dans le cas d'un verre ophtalmique, les éléments actifs peuvent en outre être adaptés pour corriger une amétropie d'un porteur du verre qui observe la première image.

D'autres particularités et avantages de la présente invention apparaîtront dans la description ci-après d'exemples de réalisation non limitatifs, en référence aux dessins annexés, dans lesquels :
- la figure 1 représente un dispositif de superposition d'images selon l'invention ;
- les figures 2a et 2b illustrent deux fonctionnements possibles d'un élément actif du dispositif de la figure 1 ;
- les figures 3a-3c illustrent trois utilisations possibles du dispositif de la figure 1 ;
- la figure 4 illustre un perfectionnement du dispositif de la figure 1, qui procure une résolution accrue de seconde image ;
- la figure 5 représente un dispositif de vision et d'enregistrement d'image selon l'invention ; et
- la figure 6 illustre un perfectionnement du dispositif de la figure 5, qui procure une résolution accrue de l'image enregistrée.

Pour raison de clarté, les dimensions des éléments qui sont représentés sur ces figures ne correspondent ni à des dimensions réelles, ni à des rapports de dimensions réelles. En outre, il est entendu que ces figures sont conçues pour faciliter une compréhension de l'invention. Pour cela, elles ne représentent pas certains éléments d'optique, de production ou de traitement d'image, qui sont connus de l'Homme du métier et qui pourront être restitués par le lecteur d'après les techniques déjà connues et/ou la description de l'invention qui est donnée ci-après.

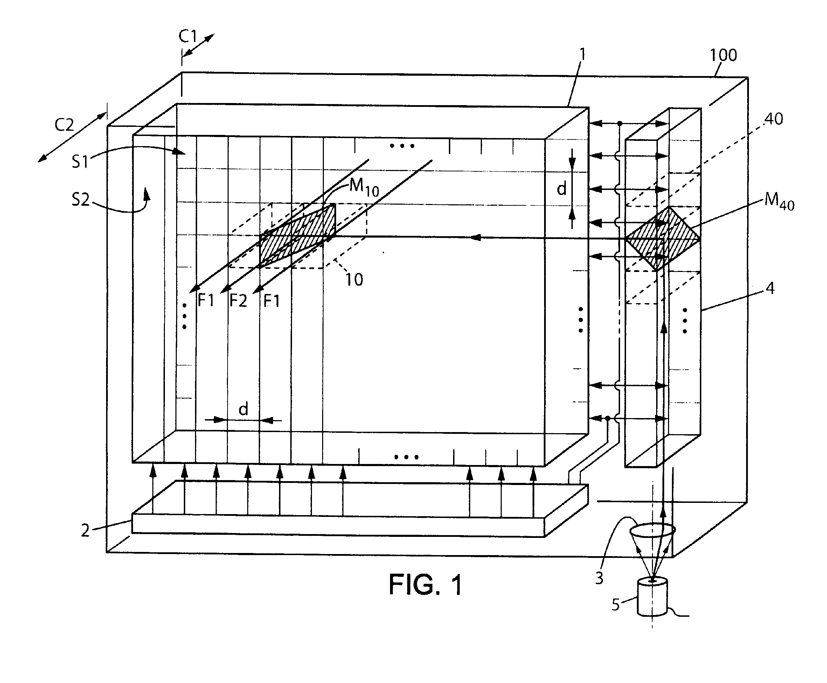

Un premier mode de réalisation d'un dispositif de superposition d'images est d'abord décrit, en référence à la figure 1.

Ce dispositif comprend un composant 100 et une source de lumière 5. Le composant 100 possède deux faces externes parallèles S1 et S2, qui définissent deux côtés opposés du composant. Ces côtés sont notés C1 et C2.

La source lumière 5 peut être une diode laser, un laser à émission verticale (VCSEL pour «Vertical-Cavity Surface-Emitting Laser»), une diode électroluminescente (LED) ou une barrette de diodes électroluminescentes. Elle est de préférence de dimensions réduites et peut être collimatée si nécessaire en un faisceau quasi-parallèle. La lumière de la source 5 pénètre dans le composant 100 par un orifice de passage de la lumière, référencé 3. L'orifice 3 est situé, par exemple, sur un côté latéral du composant 100 entre les faces S1 et S2.

Le composant 100 comprend une portion active 1 qui est comprise entre les deux faces S1 et S2. La portion 1 est divisée en zones 10, qui sont juxtaposées parallèlement aux faces S1 et S2. Les zones 10 sont disposées de préférence selon un agencement matriciel, qui définit des lignes et des colonnes d'adressage perpendiculaires entre elles. De façon symbolique et illustrative sur la figure 1, les lignes d'adressage sont définies à proximité de la face S1 du composant 100 et les colonnes d'adressage sont définies à proximité de la face S2. Chaque zone 10 est constituée par une partie de la portion active 1 qui est située entre une ligne et une colonne d'adressage, au niveau du croisement des projections de cette ligne et de cette colonne dans un même plan parallèle aux faces S1 et S2. Elle peut avoir des dimensions d qui sont de l'ordre de 0,5 mm, mesurées parallèlement aux faces S1 et S2 du composant 100.

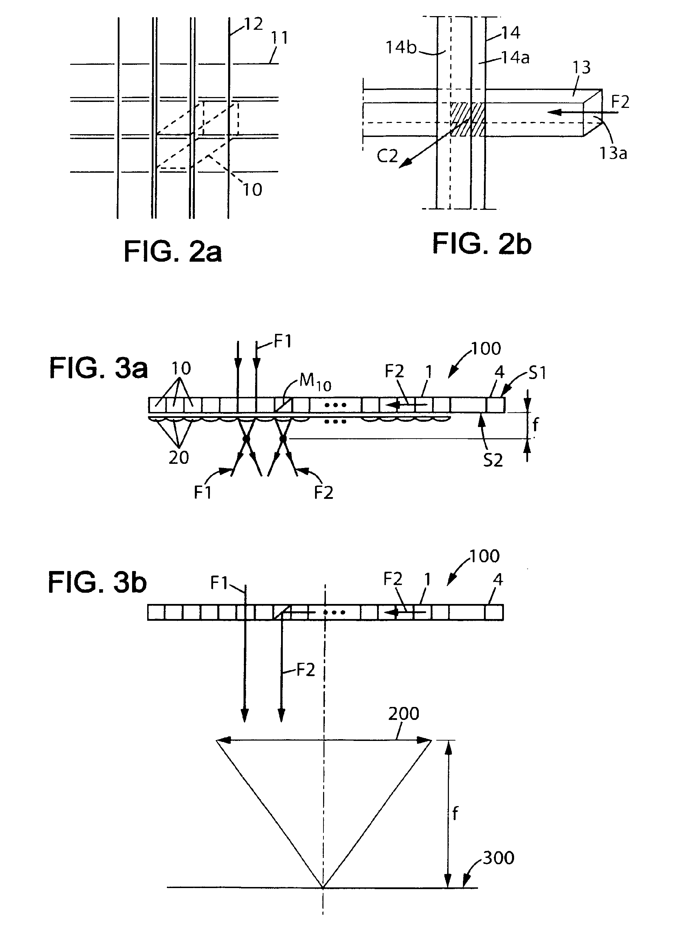

La portion active 1 est constituée d'au moins un matériau actif qui peut commuter localement entre un état transparent et un état réfléchissant. La commutation du matériau actif à l'intérieur d'une zone 10 est contrôlée via la ligne d'adressage et la colonne d'adressage qui se croisent au niveau de cette zone, d'une façon qui sera expliquée plus loin en référence aux figures 2a et 2b. Une zone 10, avec les portions correspondantes de ligne et de colonne d'adressage, est désignée globalement par élément actif 10.

Lorsqu'un élément actif 10 est dans l'état transparent, des rayons lumineux F1 peuvent traverser la portion 1 du côté C1 vers le côté C2 du composant 100, au niveau de cet élément actif. Eventuellement, les rayons F1 peuvent être déviés par la portion 1, par exemple selon un effet de lentille optique. De cette façon, le composant 100 peut former une image qui est visible du côté C2, d'une scène qui est située du côté C1 à distance du composant 100. C'est en ce sens que le composant 100 est dit transparent, et non pas transmissif. L'image de la scène peut être formée du côté C2 à une distance de focalisation déterminée, où un écran peut être placé pour matérialiser l'image. Alternativement, l'image de la scène qui est formée par la portion 1 peut être située du côté C1, en étant définie par les orientations des rayons lumineux F1 du côté C2. Elle est alors encore visible à partir du côté C2. Quelque soit la position de l'image de la scène qui est formée par les faisceaux F1, elle est parfois désignée dans la suite par image formée par transparence. Elle correspond à la première image qui a été introduite plus haut dans la description générale de l'invention.

En particulier, le composant 100 peut constituer un verre de lunettes correctrices d'amétropie. Dans ce cas, les rayons F1 sont déviés différemment entre des éléments actifs 10 qui sont distants entre eux, de façon à corriger l'amétropie d'un porteur du verre qui observe la scène située du côté C1, son oeil étant situé du côté C2.

Lorsqu'un élément actif 10 est dans l'état réfléchissant, des rayons lumineux F2 qui proviennent de l'orifice 3 à l'intérieur du composant 100 sont réfléchis par cet élément actif à la façon d'un miroir qui est orienté obliquement par rapport aux faces S1 et S2. Un tel miroir est référencé M₁₀ sur la figure 1. L'élément actif 10 qui est réfléchissant peut ne pas être simultanément transparent pour un rayon F1 provenant de la scène située du côté C1. Mais, étant donné que chaque élément actif 10 est de petite taille et qu'un unique élément 10 est réfléchissant à un instant donné, ou qu'un petit nombre d'éléments 10 sont réfléchissants simultanément, une partie principale de la portion active 1 transmet des rayons lumineux F1 qui proviennent de la scène du côté C1. Ainsi, le composant 100 apparaît globalement transparent. En outre, les éléments actifs 10 peuvent être commutés dans l'état réfléchissant tour à tour, selon une fréquence de changement d'élément actif qui est adaptée pour qu'un utilisateur du composant ne puisse pas distinguer individuellement un élément 10 qui est réfléchissant à un instant donné.

Le composant 100 comprend en outre un système d'adressage 2 qui est relié aux lignes et aux colonnes d'adressage de la portion active 1.

Le composant 100 comprend aussi des moyens 4 adaptés pour transmettre la lumière qui est produite par la source 5 entre l'orifice 3 et chaque élément actif 10, au moins pendant la durée d'état réfléchissant de cet élément. A titre d'illustration, ces moyens 4 sont représentés sur la figure 1 sous forme d'une colonne d'éléments actifs intermédiaires 40 qui sont disposés en face des extrémités des lignes d'éléments actifs 10. Les éléments actifs intermédiaires 40 peuvent être similaires aux éléments actifs 10, mais avec une orientation qui permet de réfléchir la lumière qui provient de l'orifice 3, parallèlement aux lignes d'adressage. Pour un tel fonctionnement des moyens de transmission 4, un seul élément 40 est réfléchissant à un instant donné. Il est alors équivalent à un miroir, référencé M₄₀ sur la figure 1, qui est orienté sensiblement à 45° des lignes et des colonnes d'adressage. Alternativement, les moyens de transmission 4 peuvent comprendre une ligne d'éléments actifs intermédiaires qui sont disposés en vis-à-vis d'extrémités des colonnes des éléments d'actifs 10.

Il est entendu que les moyens de transmission de la lumière qui est produite par la source 5 jusqu'aux éléments actifs 10 peuvent être de différentes natures. Par exemple, des fibres optiques peuvent guider la lumière de la source 5 respectivement jusqu'aux extrémités des lignes ou des colonnes des éléments actifs 10. Un commutateur optique peut alors être utilisé pour diriger la lumière sélectivement dans l'une de ces fibres optiques. Alternativement, un barreau translucide peut être disposé à la place de la colonne des éléments actifs intermédiaires 40. Ce barreau réfléchit la lumière vers toutes les lignes d'éléments actifs 10 d'une façon constante et régulière par rapport à un déplacement parallèle aux colonnes des éléments 10. Eventuellement, un piège à lumière peut être disposé à l'autre extrémité des lignes d'éléments actifs 10, pour absorber la lumière de la source 5 qui n'est réfléchie par aucun élément 10 vers le côté C2 du composant 100.

Deux constitutions possibles des éléments actifs 10 sont maintenant décrites en tant qu'exemples, en référence aux figures 2a et 2b.

Selon une première constitution (figure 2a), les lignes de l'agencement matriciel sont définies par des électrodes horizontales 11 séparées et juxtaposées dans un premier plan, et les colonnes de l'agencement matriciel dont définies par des électrodes verticales 12 séparées et juxtaposées dans un second plan. Ces premier et second plans sont situés de chaque côté de la portion active 1. Les électrodes 11 et 12 sont reliées au système d'adressage 2.

Le matériau actif est situé entre les plans d'électrodes 11 et 12. Il peut comprendre des cristaux liquides nématiques. Chaque paire d'électrodes 11 et 12 est disposée d'une façon adéquate pour modifier une orientation des cristaux liquides qui sont situés entre elles. Ainsi, chaque élément actif commutable 10 comprend deux portions d'électrodes et une portion de matériau actif. Le comportement de miroir réfléchissant est produit par un écart d'indice de réfraction qui apparaît entre deux côtés d'une limite des cristaux liquides nématiques orientée obliquement par rapport aux faces S1 et S2. De préférence, cette limite est tournée sensiblement à 45° par rapport aux faces S1 et S2, autour d'un axe parallèle aux colonnes d'adressage. L'état transparent de l'élément actif correspond à la suppression de cet écart d'indice. Cette suppression est commandée en modifiant la tension électrique qui est appliquée entre les électrodes 11 et 12 correspondant à l'élément actif considéré. Pour un tel fonctionnement, il peut être nécessaire d'utiliser une source de lumière 5 qui est polarisée linéairement. Alternativement, un polariseur linéaire peut être disposé dans le composant 100, par exemple à l'orifice 3. En particulier, les cristaux liquides peuvent commuter entre une orientation planaire et une orientation homéotrope, par rapport à la limite oblique. L'intensité de la réflexion lumineuse est alors donnée par les équations de Fresnel relatives à la réflexion lumineuse sur une interface entre deux milieux transparents. En particulier, cette intensité de réflexion peut être supérieure à 75%, en fonction de l'angle d'incidence de la lumière par rapport à l'interface, et de sa polarisation.

Pour la même disposition des électrodes 11 et 12, le matériau de la portion 1 peut comprendre alternativement des cristaux liquides cholestériques. L'axe d'hélice des cristaux liquides cholestériques est à un angle de 45° par rapport aux faces S1 et S2, dans un plan parallèle aux lignes d'adressage et perpendiculaire aux colonnes. Dans ce cas, la lumière de la source 5 est de préférence polarisée circulairement avant de parvenir aux éléments actifs 10. L'intensité de la réflexion lumineuse est alors 100% environ ou 50% environ, selon si la source 5 est munie ou non d'un polariseur circulaire. Selon un perfectionnement d'un composant 100 à cristaux liquides cholestériques, la portion de cristaux liquides cholestériques de certains des éléments actifs 10 peut être adaptée pour présenter un pas d'hélice variable, lorsque ces éléments actifs sont chacun dans l'état réfléchissant. Ces éléments actifs 10 à pas d'hélice variable possèdent une réflexion qui est efficace sur un intervalle de longueur d'onde plus large, ce qui peut être utile dans le cas d'une source 5 de lumière blanche, notamment.

La portion de matériau actif qui est comprise dans chaque élément 10 entre les électrodes 11 et 12 (figure 2a) peut aussi comprendre, selon encore une autre alternative possible, des gouttelettes de cristaux liquides qui sont dispersées dans une matrice. Un tel matériau actif est connu sous l'acronyme PDLC, pour «Polymer Dispersed Liquid Cristal» lorsque la matrice est à base d'un matériau polymère. La réflexion de chaque élément actif 10, qui est spéculaire, est obtenue en orientant les cristaux liquides à l'intérieur des gouttelettes par l'intermédiaire d'une différence de potentiel électrique appliquée entre les deux électrodes 11 et 12 qui correspondent à cet élément 10. Le cristal liquide qui est contenu dans les gouttelettes peut être nématique ou cholestérique, éventuellement avec un pas d'hélice variable.

Ces différents types d'éléments actifs à base de cristaux liquides contenus entre deux portions d'électrodes sont supposés connus de l'Homme du métier. On pourra donc se reporter aux nombreux documents publiés à leur sujet, notamment pour obtenir plus de détails sur leur fonctionnement.

Selon une seconde constitution des éléments actifs 10 (figure 2b), les lignes de l'agencement matriciel sont définies par des guides d'ondes horizontaux 13 et les colonnes sont définies par des guides d'onde verticaux 14. Les guides d'onde 13 sont décalés dans l'épaisseur du composant 100 par rapport aux guides d'onde 14, et sont en contact avec ces derniers au niveau d'interfaces de croisement planes. Les guides d'onde 13 et 14 sont disposés au sein d'un premier matériau transparent à faible indice de réfraction lumineuse, qui forme une matrice de la portion 1. Les guides d'onde 13 sont constitués d'un second matériau transparent, qui présente un indice de réfraction constant et supérieur à celui du matériau de matrice. De cette façon, ils peuvent conduire un faisceau de lumière F2 qui est produit par la source 5 et qui est introduit dans l'une de leurs extrémités 13a, sans qu'une partie perceptible de la lumière du faisceau soit transmise au matériau de matrice. Les guides d'onde 14 peuvent être constitués d'un troisième matériau transparent qui possède un indice de réfraction variable. L'indice de chaque guide d'onde 14 peut être égal à celui du matériau de matrice, ou être supérieur ou égal à l'indice de réfraction des guides d'onde 13. Lorsque l'indice de réfraction des guides d'onde 14 est égal à celui du matériau de matrice, la lumière qui est produite la source 5 est enfermée dans les guides d'onde 13 et ne sort pas par la face S2 du composant 100. Par contre, lorsque l'indice de l'un des guides d'onde 14 est supérieur ou égal à celui des guides 13, de la lumière qui est introduite dans l'un des guides d'onde 13 sort de celui-ci par son interface de croisement avec le guide 14 à haut indice, en direction du côté C2. Autrement dit, l'interface de croisement entre les deux guides d'onde constitue une rupture du guidage de la lumière dans le guide d'onde 13 qui est alimenté en lumière. Par exemple, les guides d'onde 14 peuvent être constitués d'une matrice polymère dans laquelle sont dispersées des gouttelettes de cristal liquide (PDLC), avec des diamètres de gouttelettes suffisamment petits pour que le matériau des guides d'onde 14 apparaisse homogène par un effet de champ moyen. Les guides d'onde 14 sont alors associés à des électrodes respectives, qui ne sont pas représentées sur la figure 2b et qui permettent de contrôler l'indice de réfraction effectif de chacun d'eux. Pour une telle constitution du composant 100, chaque élément actif 10 comprend les deux portions respectives d'un guide d'onde 13 et d'un guide d'onde 14 qui sont en contact entre elles à l'endroit de l'élément.

Pour chaque constitution des éléments actifs 10, le système d'adressage 2 peut contrôler l'ensemble des éléments actifs de sorte que certains au moins d'entre eux soient dans l'état réfléchissant pendant des durées prédéterminées. Notamment, il peut être adapté pour commander une commutation d'un unique élément actif 10 à la fois. Cet élément actif 10 réfléchit alors un faisceau de lumière F2 vers le côté C2 du composant 100. Un balayage de la portion active 1 est produit en commutant successivement tous les éléments actifs 10. Eventuellement, l'intensité de la lumière qui est produite par la source 5 peut être variée simultanément, pour obtenir des niveaux de lumière variables pour chaque élément actif 10 lorsqu'il est activé.

La portion active 1 et les moyens de transmission 4 conjuguent optiquement des points d'un champ optique additionnel qui est situé du côté de l'orifice 3, avec des points qui sont situés du côté C1 du composant 100, à l'extérieur de celui-ci. Ainsi, un motif qui est situé dans le champ optique additionnel, et qui est éclairé par la source 5, est imagé sur le côté C1 du composant 100, à distance de la face S1. Cette image du motif peut être réelle ou virtuelle, en fonction de l'orientation des miroirs équivalents aux éléments actifs 10 lorsqu'ils sont commutés dans l'état réfléchissant. Lorsque ces miroirs équivalents dirigent les faisceaux F2 vers le côté C2 du composant, l'image du motif est visible par un utilisateur dont l'oeil est situé de ce côté C2, et qui regarde vers le côté C1 à travers le composant 100. Cette image qui est produite par les faisceaux F2, apparaît alors superposée à l'image de la scène qui est formée par les faisceaux F1. L'image formée par les faisceaux F2 est désignée dans la suite par image de balayage, à cause de la variation des éléments actifs 10 qui la transmettent, et correspond à la seconde image qui a été introduite dans la description générale de l'invention.

Lorsque le composant transparent 100 est intégré dans un verre ophtalmique, ou constitue lui-même un tel verre, il peut être adapté pour corriger une amétropie d'un porteur du verre à la fois lorsque ce porteur perçoit l'image de balayage et lorsqu'il perçoit l'image de la scène formée par transparence du composant. Une telle correction d'amétropie pour les deux images peut être réalisée, par exemple, en adaptant la forme de la face S2 du composant 100. A l'inverse, une adaptation de la forme de la seule face S1 du composant 100 peut permettre de ne corriger l'amétropie du porteur que pour sa perception de l'image de la scène.

Il est entendu que les éléments actifs 10 peuvent modifier eux-mêmes l'image de balayage de nombreuses façons. Une telle fonction supplémentaire des éléments actifs 10 est réalisable tout particulièrement lorsque ces éléments comprennent des portions d'une matrice polymère qui incorpore des gouttelettes de cristaux liquides dispersées (PDLC). Une nature, une orientation et/ou une répartition des gouttelettes dans la matrice peut notamment être adaptée pour modifier la formation de l'image de balayage.

Selon un perfectionnement possible d'un dispositif de superposition d'images tel que décrit précédemment, les éléments actifs 10 du composant 100 peuvent être associés à des couleurs différentes par groupes d'au moins trois éléments actifs voisins, de façon à produire une image de balayage colorée. Par exemple, des filtres colorés peuvent être disposés contre chaque élément actif 10, du côté C2 du composant. Eventuellement, des pigments fluorescents peuvent être utilisés à la place des filtres colorés. Dans ce dernier cas, la source 5 doit être remplacée par une source de rayonnement ultraviolet. En particulier, le système RVB d'obtention d'images colorées peut être utilisé.

Alternativement, les éléments actifs 10 peuvent être adaptés pour réfléchir de la lumière blanche, et plusieurs systèmes de transmission 4 peuvent être disposés en parallèle à l'entrée des lignes des éléments actifs 10. Ces systèmes de transmission sont alors agencés pour transmettre respectivement des faisceaux lumineux qui sont produits par des sources de couleurs complémentaires. Ces faisceaux colorés sont transmis simultanément à un même élément actif 10 qui est dans l'état réfléchissant. Par rapport au mode de réalisation précédent selon lequel la couleur était générée au niveau des éléments actifs 10 eux-mêmes, une définition supérieure et une luminosité plus importante peuvent être obtenues en utilisant plusieurs sources de lumière colorées.

Selon encore une autre possibilité d'obtention d'une image de balayage colorée, un multiplexage temporel de couleurs peut être utilisé lorsque les éléments actifs 10 sont efficaces en réflexion sur tout l'intervalle de lumière visible.

On décrit maintenant trois utilisations possibles d'un dispositif de superposition d'images tel que décrit précédemment, en référence aux figures 3a-3c. Ces figures sont construites à partir de vues de dessus du composant 100 tel que représenté sur la figure 1.

Conformément à la figure 3a, le composant 100 peut être associé à un réseau de microlentilles 20 qui sont respectivement situées en vis-à-vis des éléments actifs 10 sur la face S2 du composant. Chaque microlentille 20 focalise le faisceau F1 ou F2 qui est transmis par l'élément actif 10 correspondant, à une distance f de la face S2 qui peut être égale à 1 mm par exemple. Le dispositif constitue alors un écran de visualisation en transparence de la scène qui est située du côté C1, et peut produire simultanément une image de balayage en surimpression, visible au-delà du plan du dispositif. Eventuellement, un film transmissif diffusant, qui n'est pas représenté sur la figure, peut être ajouté dans le plan de focalisation des microlentilles 20 pour augmenter un secteur angulaire de visibilité des deux images.

Conformément à la figure 3b, le composant 100 peut aussi être associé à un dispositif de projection 200, symbolisé par une lentille convergente, et à un écran 300. Dans ce cas, la distance de focalisation f peut être de plusieurs mètres afin de permettre une bonne vision des images par plusieurs personnes installées confortablement. Pour cette seconde utilisation, les éléments actifs 10 sont avantageusement adaptés de sorte que l'image de balayage soit produite dans un plan qui est superposé au plan de l'image formée par transparence du composant 100, lorsque la scène qui correspond à cette image par transparence est éloignée du composant 100. L'image de la scène et l'image de balayage sont alors nettes simultanément, pour un même réglage de focalisation du dispositif de projection 200.

La configuration optique qui est illustrée par la figure 3b correspond aussi à une utilisation d'un dispositif de superposition d'images selon l'invention lorsqu'il est intégré à un verre de lunettes ophtalmiques. Dans ce cas, la lentille 200 correspond au cristallin d'un porteur du verre, et l'écran 300 correspond à sa rétine.

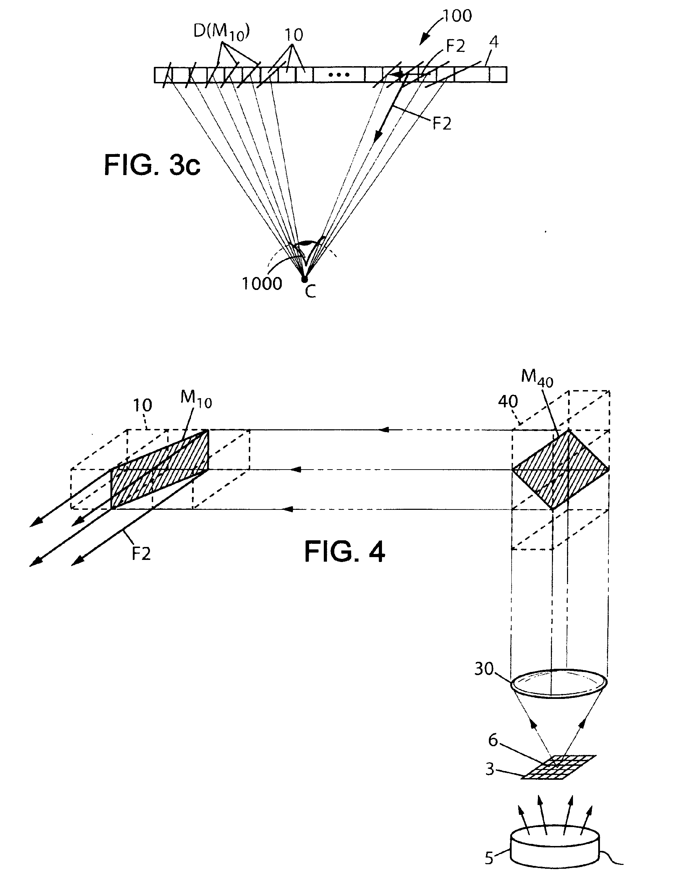

Conformément à la figure 3c, le composant 100 peut être visualisé par un observateur qui est assez proche du composant. Cet observateur est représenté par son oeil 1000. Afin d'éviter à cet observateur de se déplacer pour observer toute l'image qui est produite par balayage par le dispositif, les faisceaux lumineux F2 qui sont successivement transmis par les éléments actifs 10 vers le côté C2 du composant 100 peuvent passer sensiblement par un même point commun qui est noté C. C est situé du côté C2 du composant 100. Dans ce cas, l'observateur peut voir l'ensemble de l'image de balayage sans se déplacer, seulement en tournant l'oeil, lorsqu'il se place de façon que le centre de rotation de son oeil 1000 soit situé approximativement au point C. Pour cela, une orientation des miroirs M₁₀ qui sont équivalents aux éléments actifs 10 dans l'état réfléchissant, notée D(M₁₀) sur la figure 3c, varie progressivement le long de la surface du composant 100 pour que les directions des faisceaux F2 qui sont réfléchis par les éléments 10 passent toutes par le point C. Une telle adaptation du composant 100 est particulièrement avantageuse lorsque ce composant est utilisé comme pare-brise de véhicule ou d'avion, avec un affichage de données de pilotage qui apparaît en surimpression («head-up display»). Elle est aussi avantageuse lorsque le composant 100 est intégré à un verre de lunettes ophtalmiques, un verre de masque ou une visière de casque.

Pour cette dernière utilisation du dispositif de superposition d'images, les éléments actifs 10 participent activement à la formation de l'image de balayage, en ajustant la direction d'émergence des faisceaux lumineux qui la forment. Ils peuvent aussi, alternativement ou en combinaison, ajuster la distance de focalisation de l'une ou l'autre des deux images, ou des deux. D'autres fonctions des éléments actifs 10, qui peuvent participer à la formation de l'image de balayage, peuvent encore être mises en oeuvre. De telles fonctions sont générées préférentiellement lorsque les éléments actifs 10 sont construits à partir de gouttelettes de cristaux liquides dispersées dans une matrice polymère (PDLC). En effet, les techniques holographiques qui sont actuellement disponibles pour apporter des fonctions supplémentaires à ce type d'éléments actifs permettent des réalisations pratiques et peu onéreuses de composants 100 perfectionnés.

Le dispositif représenté sur la figure 4 est analogue à celui qui est illustré par la figure 1, mais il comprend en outre un générateur de portions de seconde image 6 qui est disposé sensiblement au niveau de l'orifice 3, dans le champ optique additionnel. Le générateur 6 est adapté pour former une portion de la seconde image en ajustant localement la lumière qui est produite par la source 5. Par exemple, le générateur 6 peut comprendre lui-même un carré de 5 x 5 pixels, ces pixels pouvant être du type à modulation d'intensité lumineuse par exemple. Dans ce cas, le générateur 6 est constitué de points d'image qui ont chacun une intensité variable. La source 5 peut être adaptée pour éclairer d'une façon sensiblement uniforme toute la surface des pixels du générateur 6. La portion entière d'image qui est formée par le générateur 6 à un instant donné est alors transmise par un élément actif 10 qui est simultanément réfléchissant. De cette façon, la portion d'image est reproduite pour être visible depuis le côté C2 du composant 100. Le même élément actif 10 réfléchit alors simultanément la lumière qui est produite ou modulée par tous les pixels du générateur 6. Pour cela, un système optique intermédiaire, qui est symbolisé par une lentille 30 sur la figure 4, peut être disposé pour adapter les dimensions apparentes de la portion d'image qui est produite par le générateur 6 à celles d'un élément actif 10, et à l'ouverture des moyens de transmission 4.

Le système d'adressage 2 est aussi relié au générateur 6 et est adapté pour commander à ce dernier de former successivement des portions de la seconde image selon un ordre déterminé. Il commande simultanément des commutations synchronisées des éléments actifs 10 selon le même ordre dans la surface du composant 100. Ainsi, chaque portion de la seconde image est réfléchie par un élément actif 10 et la seconde image apparaît reconstruite pour un observateur qui est situé sur le côté C2 du composant 100. Autrement dit, deux balayages sont simultanément commandés par le système d'adressage 2 : un premier balayage qui déplace une fenêtre d'affichage du générateur 6 selon des positions contiguës à l'intérieur d'une image plus grande, et un second balayage qui change l'élément actif 10 qui est réfléchissant dans la matrice du composant 100. L'identité et la synchronisation entre ces deux balayages permet de restituer complètement la seconde image à travers la face S2 du composant 100. Les miroirs équivalents aux éléments actifs 10 qui sont commutés dans l'état réfléchissant peuvent être orientés différemment les uns des autres, de façon à restituer une juxtaposition des portions reproduites de la seconde image, qui correspond aux positions de la fenêtre d'affichage du générateur 6 dans l'image complète.

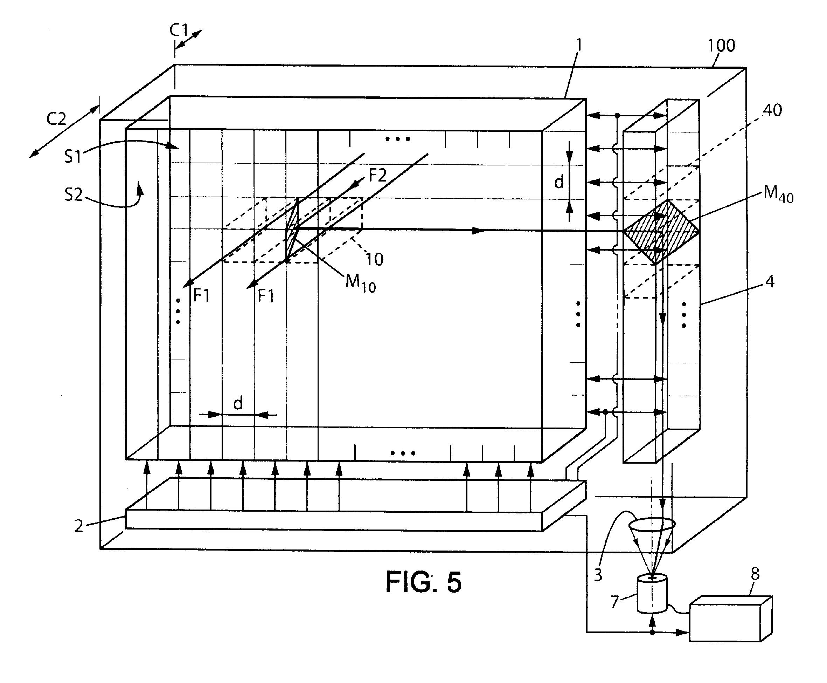

Un dispositif de vision et d'enregistrement d'image est maintenant décrit, en référence à la figure 5.

Ce dispositif comprend un composant 100 qui peut être conforme à l'un des modes de réalisation qui ont déjà été décrits plus haut. Par rapport à la figure 1, le composant 100 est retourné, de sorte que chaque élément actif 10 établit un chemin optique entre le côté C1 du composant 100 et l'orifice 3. Le dispositif comprend, en plus du composant 100, un détecteur photosensible 7 et une unité d'enregistrement 8 qui est reliée au détecteur. Le détecteur 7 est disposé pour recevoir, à travers l'orifice 3, de la lumière qui provient d'une scène située du côté C1 du composant 100, et qui est réfléchie par l'un des éléments actifs 10. Le système d'adressage 2 est relié au détecteur 7 pour synchroniser la durée d'état réfléchissant de l'un des éléments actifs 10 du composant 100 avec une fenêtre temporelle de détection du détecteur 7. Il est aussi relié à l'unité d'enregistrement 8 pour transmettre à celle-ci des coordonnées de l'élément actif 10 qui est réfléchissant pendant cette fenêtre temporelle de détection. Ainsi, l'unité d'enregistrement 8 peut enregistrer une valeur d'intensité lumineuse détectée en liaison avec les coordonnées de l'élément actif 10 qui a transmis cette intensité. De cette façon, l'image de la scène peut être enregistrée dans son intégralité, en balayant la surface de composant 100 pour commuter chaque élément actif 10 dans l'état réfléchissant. Lors de ce balayage, la durée de l'état réfléchissant de chaque élément actif 10 et la fréquence de changement des éléments actifs 10 qui sont commutés sont adaptées de sorte que l'image de la scène qui est formée par transparence par le composant 100 apparaisse continue. En outre, l'intensité de l'image de la scène qui est perçue depuis le côté C2 du composant 100 n'est pas réduite de façon perceptible par l'opération d'enregistrement, car un seul élément actif 10 réfléchit une partie de la lumière émise par la scène à un instant donné.

Selon un perfectionnement d'un tel dispositif de vision et d'enregistrement d'image, le détecteur 7 peut comprendre une matrice de plusieurs éléments photosensibles. Le dispositif peut alors être adapté pour enregistrer des intensités de flux lumineux qui sont réfléchis simultanément par plusieurs éléments actifs 10 vers des éléments photosensibles respectifs. La durée d'enregistrement de l'image entière de la scène est alors diminuée, d'un facteur qui est sensiblement proportionnel au nombre d'éléments photosensibles qui peuvent être activés simultanément. Pour cela, il est nécessaire que les moyens de transmission de la lumière entre les éléments actifs 10 et l'orifice 3 soient adaptés pour établir en parallèle plusieurs chemins optiques indépendants. Dans un tel fonctionnement, deux éléments photosensibles quelconques du détecteur 7 sont associés à deux éléments actifs 10 différents pendant chaque fenêtre temporelle de détection.

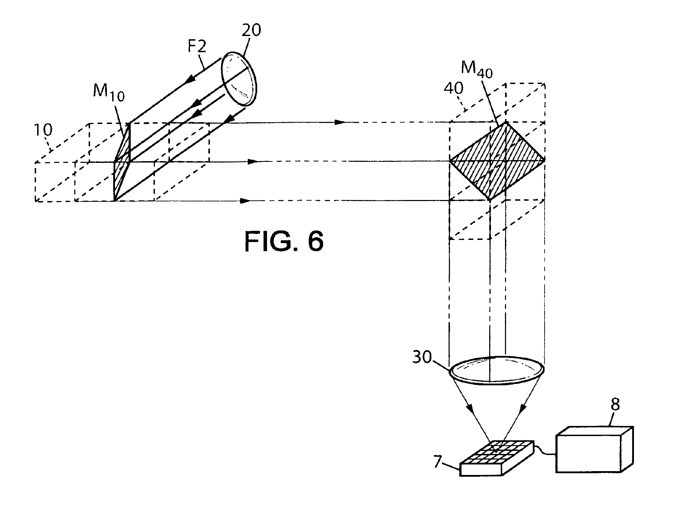

Un autre perfectionnement d'un dispositif de vision et d'enregistrement d'image selon l'invention est illustré par la figure 6. Il correspond au principe de multiplication de résolution qui a été expliqué plus haut en référence à la figure 4, mais en étant appliqué à la saisie d'image. Le détecteur 7 comprend encore une matrice d'éléments photosensibles, mais le dispositif est maintenant adapté pour que plusieurs éléments photosensibles, et de préférence tous les éléments photosensibles du détecteur 7, reçoivent simultanément de la lumière qui est réfléchie par un même élément actif 10 à un instant donné. De cette façon, une portion de l'image de la scène qui est située du côté C1 du composant 100 peut être enregistrée pendant une unique fenêtre temporelle de détection. Cette portion est définie par les dimensions de chaque élément actif 10, et les éléments photosensibles du détecteur 7 enregistrent en parallèle des intensités de flux lumineux respectifs qui correspondent à des pixels effectifs de l'image de la scène. Pour un tel fonctionnement, le composant 100 peut être associé à un système optique qui est placé du côté C1, afin de former une image de la scène sur la face S1 du composant.

Il est entendu que le composant transparent qui est l'objet principal de l'invention, ainsi que les dispositifs qui sont réalisés à partir de celui-ci, peuvent être modifiés ou adaptés de multiples façons tout en conservant certains au moins des avantages de l'invention, tels que définis par les revendications.

En outre, le système d'adressage du composant transparent peut être adapté pour changer les éléments actifs qui sont successivement réfléchissants selon des ordres variés. Notamment, l'ordre de balayage des éléments actifs pour un dispositif de superposition d'images peut être adapté en fonction de l'image qui est produite par balayage.

## Revendications

1. Composant transparent (100) adapté pour transmettre, à travers une surface dudit composant, des rayons lumineux issus d'une scène située d'un premier côté du composant pour former une première image représentative de ladite scène et visible d'un second côté du composant, le composant étant **caractérisé en ce qu'**il comprend :
- un ensemble d'éléments actifs (10) juxtaposés parallèlement à la surface du composant et commutables chacun entre un état individuel transparent et un état individuel réfléchissant ;
- un système d'adressage (2) relié à chaque élément actif et adapté pour commander une commutation dudit élément ;
- au moins un orifice de passage de lumière (3) ; et
- des moyens de transmission de lumière (4) disposés entre l'orifice de passage et les éléments actifs, de sorte que chaque élément actif peut établir un chemin lumineux entre ledit orifice de passage de la lumière et l'un des côtés du composant lorsque ledit élément actif est dans l'état réfléchissant ;
le système d'adressage (2) étant adapté en outre pour qu'un nombre réduit d'éléments actifs (10) soient simultanément dans l'état réfléchissant, de sorte que ladite première image apparaisse de façon permanente à travers le composant, et
les moyens de transmission de lumière (4) et les éléments actifs (10) étant en outre disposés pour conjuguer optiquement des points d'un champ optique additionnel situé d'un même côté des dits moyens de transmission de lumière que l'orifice de passage de la lumière (3), avec des points respectifs situés à l'extérieur de et à distance du composant, sur l'un parmi le premier ou le second côté dudit composant.

2. Composant selon la revendication 1, dans lequel le système d'adressage (2) est adapté en outre pour que l'état réfléchissant de certains au moins des éléments actifs (10) soit intermittent, avec une durée finie d'état réfléchissant de chaque élément actif et avec une fréquence de changement des éléments actifs qui sont commutés.

3. Composant selon la revendication 1 ou 2, dans lequel les éléments actifs (10) sont juxtaposés dans la surface dudit composant selon un agencement matriciel.

4. Composant selon la revendication 3, dans lequel les moyens de transmission de lumière (4) comprennent eux-mêmes des éléments actifs intermédiaires (40) commutables chacun entre un état individuel transparent et un état individuel réfléchissant, disposés chacun entre l'orifice de passage de lumière (3) et une extrémité d'une ligne ou d'une colonne de l'agencement matriciel, de sorte que chaque élément actif intermédiaire peut établir une connexion optique entre l'orifice de passage de la lumière et l'un des éléments actifs (10) de la colonne ou la ligne correspondante lorsque ledit élément actif intermédiaire est dans l'état réfléchissant.

5. Composant selon la revendication 3 ou 4, dans lequel le système d'adressage (2) est adapté pour commander des commutations simultanées de plusieurs éléments actifs (10) appartenant à une même ligne ou à une même colonne de l'agencement matriciel.

6. Composant selon l'une quelconque des revendications 1 à 4, dans lequel le système d'adressage (2) est adapté pour commander une commutation d'un unique élément actif (10) à la fois.

7. Composant selon l'une quelconque des revendications précédentes, dans lequel les éléments actifs (10) sont associés à des couleurs différentes par groupes d'au moins trois éléments actifs voisins.

8. Composant selon l'une quelconque des revendications précédentes, dans lequel certains au moins des éléments actifs (10) ont des dimensions inférieures à 2 mm, voire inférieures à 0,5 mm, parallèlement à la surface du composant.

9. Composant selon l'une quelconque des revendications 1 à 8, dans lequel certains au moins des éléments actifs (10) comprennent chacun une portion à base de cristaux liquides nématiques, et deux portions d'électrodes (11, 12) reliées au système d'adressage (2) et disposées de façon à modifier une orientation desdits cristaux liquides nématiques, ladite modification d'orientation étant adaptée pour produire une commutation de l'élément actif correspondant.

10. Composant selon l'une quelconque des revendications 1 à 8, dans lequel certains au moins des éléments actifs (10) comprennent chacun une portion à base de cristaux liquides cholestériques, et deux portions d'électrodes (11, 12) reliées au système d'adressage (2) et disposées de façon à modifier une orientation desdits cristaux liquides cholestériques, ladite modification d'orientation étant adaptée pour produire une commutation de l'élément actif correspondant.

11. Composant selon la revendication 10, dans lequel la portion de cristaux liquides cholestériques de certains des éléments actifs (10) possède un pas d'hélice variable dans l'état réfléchissant de l'élément actif correspondant.

12. Composant selon l'une quelconque des revendications 1 à 8, dans lequel certains au moins des éléments actifs (10) comprennent chacun des gouttelettes de cristaux liquides dispersées dans une matrice, et deux portions d'électrodes (11, 12) reliées au système d'adressage et disposées de façon à modifier une orientation desdits cristaux liquides dans chaque gouttelette, ladite modification d'orientation à l'intérieur des gouttelettes étant adaptée pour produire une commutation de l'élément actif correspondant.

13. Composant selon l'une quelconque des revendications 1 à 8, dans lequel certains au moins des éléments actifs (10) comprennent chacun une portion de guide d'onde (13) et une portion latérale transparente (14) en contact avec ladite portion de guide d'onde, ladite portion latérale ayant un indice de réfraction variable entre deux valeurs respectivement inférieure et supérieure ou égale à la valeur de l'indice de réfraction du guide d'onde.

14. Dispositif transparent de superposition d'images comprenant :
- un composant transparent (100) selon l'une quelconque des revendications 1 à 13 ; et
- une source de lumière (5) disposée pour produire de la lumière à travers l'orifice de passage du composant (3) de sorte que ladite lumière peut être réfléchie par l'un au moins des éléments actifs (10) vers le second côté du composant transparent, de façon à former une seconde image d'un motif situé dans le champ optique additionnel, ladite seconde image étant visible du second côté du composant et apparaissant superposée à la première image.

15. Dispositif de superposition d'images selon la revendication 14, dans lequel le système d'adressage (2) est adapté pour commander successivement des commutations d'éléments actifs différents, de façon à produire la seconde image par balayage des éléments actifs,
et dans lequel la durée d'état réfléchissant de chaque élément actif et la fréquence de changement des éléments actifs qui sont commutés sont adaptées de sorte que la seconde image apparaisse continue pour un utilisateur du dispositif.

16. Dispositif de superposition d'images selon la revendication 15, dans lequel la durée de l'état réfléchissant de chaque élément actif (10) et la fréquence de changement des éléments actifs qui sont commutés sont adaptées pour que la seconde image apparaisse continue pour un utilisateur du dispositif qui observe lesdites première et seconde images à l'oeil nu.

17. Dispositif de superposition d'images selon l'une quelconque des revendications 14 à 16, dans lequel certains au moins des éléments actifs (10) comprennent chacun des gouttelettes de cristaux liquides dispersées dans une matrice de l'élément actif, et deux portions d'électrodes (11, 12) reliées au système d'adressage (2) et disposées de façon à modifier une orientation desdits cristaux liquides dans chaque gouttelette, ladite modification d'orientation à l'intérieur des gouttelettes étant adaptée pour produire une commutation de l'élément actif correspondant,
et dans lequel une nature, une orientation et/ou une répartition des gouttelettes dans la matrice de l'élément actif correspondant est en outre adaptée pour modifier une formation de ladite seconde image.

18. Dispositif de superposition d'images selon la revendication 17, dans lequel une nature, une orientation et/ou une répartition des gouttelettes dans la matrice de l'élément actif correspondant est en outre adaptée de sorte que des rayons lumineux qui sont réfléchis par des éléments actifs différents passent sensiblement par un point commun situé du second côté du composant.

19. Dispositif de superposition d'images selon l'une quelconque des revendications 14 à 18, dans lequel les éléments actifs (10) sont adaptés pour produire la seconde image dans un plan superposé à un plan de formation de la première image lorsque la scène correspondant à ladite première image est éloignée du composant.

20. Dispositif de superposition d'images selon l'une quelconque des revendications 14 à 19, comprenant en outre :
- un générateur de portions de seconde image (6) disposé dans le champ optique additionnel et relié au système d'adressage (2), ledit générateur étant adapté pour former une portion de la seconde image à partir de la lumière produite par la source (5),
et dans lequel le système d'adressage (2) est adapté en outre pour commander audit générateur (6) de former successivement des portions de la seconde image selon un ordre déterminé, et pour commander des commutations synchronisées des éléments actifs (10) selon le même ordre dans la surface du composant (100), de sorte que chaque portion de seconde image est réfléchie par un élément actif et que la seconde image apparaisse reconstruite sur le second côté du composant.

21. Dispositif de superposition d'images selon la revendication 20, dans lequel le générateur de portions de seconde image (6) comprend des points d'image ayant chacun une intensité modulée de façon variable.

22. Dispositif de superposition d'images selon l'une quelconque des revendications 14 à 21, formant une lentille optique, un verre ophtalmique, un verre de masque ou une visière de casque.

23. Dispositif de superposition d'images selon la revendication 22, formant un verre ophtalmique et dans lequel les éléments actifs (10) sont en outre adaptés pour corriger une amétropie d'un porteur dudit verre, lorsque ledit porteur observe l'une au moins des première et seconde images.

24. Dispositif de vision et d'enregistrement d'image comprenant :
- un composant transparent (100) selon l'une quelconque des revendications 1 à 13 ;
- un détecteur photosensible (7) disposé dans le champ optique additionnel pour recevoir, à travers l'orifice de passage du composant (3), de la lumière provenant de la scène et réfléchie par l'un au moins des éléments actifs (10) pendant une durée de détection ; et
- une unité d'enregistrement (8) reliée au détecteur de façon à enregistrer des intensités lumineuses reçues par ledit détecteur,
dans lequel le système d'adressage (2) est relié en outre au détecteur (7) et à l'unité d'enregistrement (8) de façon à transmettre à ladite unité des coordonnées d'un élément actif (10) dans la surface du composant transparent, qui est dans l'état réfléchissant pendant la durée de détection dudit détecteur, et dans lequel la durée de l'état réfléchissant de chaque élément actif et la fréquence de changement des éléments actifs qui sont commutés sont adaptées de sorte que la première image formée par le composant apparaisse continue pour un utilisateur du dispositif.

25. Dispositif de vision et d'enregistrement d'image selon la revendication 24, dans lequel le détecteur (7) comprend une matrice d'éléments photosensibles.

26. Dispositif de vision et d'enregistrement d'image selon la revendication 24 ou 25, formant une lentille optique, un verre ophtalmique, un verre de masque ou une visière de casque.

27. Dispositif de vision et d'enregistrement d'image selon la revendication 26, formant un verre ophtalmique et adapté en outre pour corriger une amétropie d'un porteur dudit verre lorsque ledit porteur observe la première image.

## Claims

1. A transparent component (100) adapted to transmit, through a surface of said component, light rays originating from a scene situated on a first side of the component to form a first image representative of said scene and visible on a second side of the component, the component being **characterized in that** it comprises:
- a set of active elements (10) juxtaposed parallel to the surface of the component and each switchable between a transparent individual state and a reflecting individual state;
- an addressing system (2) connected to each active element and suitable for controlling a switching of said element;
- at least one light passage opening (3); and
- light transmission means (4) arranged between the passage opening and the active elements, so that each active element can establish a light path between said light passage opening and one of the sides of the component when said active element is in the reflecting state;
the addressing system (2) being further adapted so that a reduced number of active elements (10) are simultaneously in the reflecting state, so that said first image appears permanently through the component, and
the light transmission means (4) and the active elements (10) being further arranged to conjugate optically points of an additional optical field situated on one and the same side of said light transmission means as the light passage opening (3) with respective points situated outside and at a distance from the component, on one of the first or second sides of said component.

2. The component as claimed in claim 1, in which the addressing system (2) is also adapted so that the reflecting state of at least some of the active elements (10) is intermittent, with the reflecting state of each active element having a finite duration and with a frequency for changing of the active elements that are switched.

3. The component as claimed in claim 1 or 2, in which the active elements (10) are juxtaposed in the surface of said component in a matrix arrangement.

4. The component as claimed in claim 3, in which the light transmission means (4) themselves comprise intermediate active elements (40) each switchable between a transparent individual state and a reflecting individual state, each arranged between the light passage opening (3) and one end of a line or a column of the matrix arrangement, so that each intermediate active element can establish an optical connection between the light passage opening and one of the active elements (10) of the corresponding column or line when said intermediate active element is in the reflecting state.

5. The component as claimed in claim 3 or 4, in which the addressing system (2) is adapted to control simultaneous switchovers of several active elements (10) belonging to one and the same line or one and the same column of the matrix arrangement.

6. The component as claimed in any one of claims 1 to 4, in which the addressing system (2) is adapted to control a switchover of a single active element (10) at a time.

7. The component as claimed in any one of the preceding claims, in which the active elements (10) are associated with different colors in groups of at least three adjacent active elements.

8. The component as claimed in any one of the preceding claims, in which at least some of the active elements (10) have dimensions less than 2 mm, even less than 0.5 mm, parallel to the surface of the component.

9. The component as claimed in any one of claims 1 to 8, in which at least some of the active elements (10) each comprise a portion based on nematic liquid crystals, and two electrode portions (11, 12) connected to the addressing system (2) and arranged so as to modify an orientation of said nematic liquid crystals, said orientation modification being adapted to produce a switchover of the corresponding active element.

10. The component as claimed in any one of claims 1 to 8, in which at least some of the active elements (10) each comprise a portion based on cholesteric liquid crystals, and two electrode portions (11, 12) connected to the addressing system (2) and arranged so as to modify an orientation of said cholesteric liquid crystals, said orientation modification being adapted to produce a switchover of the corresponding active element.

11. The component as claimed in claim 10, in which the portion of cholesteric liquid crystals of some of the active elements (10) has a variable screw pitch in the reflecting state of the corresponding active element.

12. The component as claimed in any one of claims 1 to 8, in which at least some of the active elements (10) each comprise liquid crystal droplets dispersed in a matrix, and two electrode portions (11, 12) connected to the addressing system and arranged so as to modify an orientation of said liquid crystals in each droplet, said orientation modification within the droplets being adapted to produce a switchover of the corresponding active element.

13. The component as claimed in any one of claims 1 to 8, in which at least some of the active elements (10) each comprise a waveguide portion (13) and a transparent lateral portion (14) in contact with said waveguide portion, said lateral portion having a refractive index that varies between two values which are respectively lower than or equal to and higher than or equal to the value of the refractive index of the waveguide.

14. A transparent device for overlaying images comprising:
- a transparent component (100) as claimed in any one of claims 1 to 13; and
- a light source (5) arranged to produce light through the passage opening of the component (3) so that said light can be reflected by at least one of the active elements (10) toward the second side of the transparent component, so as to form a second image from a pattern situated in the additional optical field, said second image being visible on the second side of the component and appearing overlaid on the first image.

15. The image overlaying device as claimed in claim 14, in which the addressing system (2) is adapted to successively control switchovers of different active elements, so as to produce the second image by scanning the active elements,
and in which the reflecting state duration of each active element and the frequency for changing of the active elements that are switched are adapted so that the second image appears continuous for a user of the device.

16. The image overlaying device as claimed in claim 15, in which the duration of the reflecting state of each active element (10) and the frequency for changing the active elements that are switched are adapted so that the second image appears continuous for a user of the device observing said first and second images with the naked eye.

17. The image overlaying device as claimed in any one of claims 14 to 16, in which at least some of the active elements (10) each comprise liquid crystal droplets dispersed in a matrix of the active element, and two electrode portions (11, 12) connected to the addressing system (2) and arranged so as to modify an orientation of said liquid crystals in each droplet, said orientation modification within the droplets being adapted to produce a switchover of the corresponding active element,
and in which a nature, an orientation and/or a distribution of the droplets in the matrix of the corresponding active element is further adapted to modify a formation of said second image.

18. The image overlaying device as claimed in claim 17, in which a nature, an orientation and/or a distribution of the droplets in the matrix of the corresponding active element is further adapted so that light rays that are reflected by different active elements pass substantially through a common point situated on the second side of the component.

19. The image overlaying device as claimed in any one of claims 14 to 18, in which the active elements (10) are adapted to produce the second image in a plane overlaid on a formation plane of the first image when the scene corresponding to said first image is distant from the component.

20. The image overlaying device as claimed in any one of claims 14 to 19, further comprising:
- a generator of second image portions (6) arranged in the additional optical field and linked to the addressing system (2), said generator being adapted to form a portion of the second image from the light produced by the source (5),
and in which the addressing system (2) is further adapted to control said generator (6) to successively form portions of the second image in a determined order, and to control synchronized switchovers of the active elements (10) in the same order in the surface of the component (100), so that each second image portion is reflected by an active element and the second image appears reconstructed on the second side of the component.

21. The image overlaying device as claimed in claim 20, in which the generator of second image portions (6) comprises image dots each having a variably modulated intensity.

22. The image overlaying device as claimed in any one of claims 14 to 21, forming an optical lens, an ophthalmic lens, a mask lens or a helmet visor.

23. The image overlaying device as claimed in claim 22, forming an ophthalmic lens and in which the active elements (10) are further adapted to correct an ametropia of a wearer of said lens, when said wearer observes at least one of the first and second images.

24. An image viewing and storage device comprising:
- a transparent component (100) as claimed in any one of claims 1 to 13;
- a photosensitive detector (7) arranged in the additional optical field to receive, through the passage opening of the component (3), light originating from the scene and reflected by at least one of the active elements (10) during a detection time; and
- a storage unit (8) connected to the detector so as to store light intensities received by said detector,
in which the addressing system (2) is further connected to the detector (7) and to the storage unit (8) so as to transmit to said unit coordinates of an active element (10) in the surface of the transparent component, which is in the reflecting state during the detection time of said detector,
and in which the duration of the reflecting state of each active element and the frequency for changing the active elements that are switched are adapted so that the first image formed by the component appears continuous for a user of the device.

25. The image viewing and storage device as claimed in claim 24, in which the detector (7) comprises a matrix of photosensitive elements.

26. The image viewing and storage device as claimed in claim 24 or 25, forming an optical lens, an ophthalmic lens, a mask lens or a helmet visor.

27. The image viewing and storage device as claimed in claim 26, forming an ophthalmic lens and further adapted to correct an ametropia of a wearer of said lens when said wearer observes the first image.

## Patentansprüche

1. Transparentes Bauteil (100), welches dazu angepasst ist, durch eine Fläche des Bauteils Lichtstrahlen zu transmittieren, welche von einer Szene ausgehen, die sich auf einer ersten Seite des Bauteils befindet, um ein erstes Bild zu bilden, welches die Szene darstellt und von einer zweiten Seite des Bauteils sichtbar sind, wobei das Bauteil **dadurch gekennzeichnet ist, dass** es umfasst:
- eine Anordnung von aktiven Komponenten (10), welche parallel zu der Fläche des Bauteils nebeneinander angeordnet sind und von denen jedes zwischen einem transparenten Einzelzustand und einem reflektierenden Einzelzustand umschaltbar ist;
- ein Adressiersystem (2), welches mit jeder aktiven Komponente verbunden ist und dazu angepasst ist, ein Umschalten der Komponente anzuweisen;
- wenigstens eine Lichtdurchgangsöffnung (3); und
- Lichttransmissionsmittel (4), welche zwischen der Durchgangsöffnung und den aktiven Komponenten derart angeordnet sind, dass jede aktive Komponente einen Lichtpfad zwischen der Durchgangsöffnung des Lichts und einer der Seiten des Bauteils bilden kann, wenn die aktive Komponente in dem reflektierenden Zustand ist;
wobei das Adressiersystem (2) ferner dazu angepasst ist, dass eine reduzierte Anzahl aktiver Komponenten (10) derart gleichzeitig in dem reflektierenden Zustand ist, dass das erste Bild permanent durch das Bauteil erscheint, und
wobei die Lichttransmissionsmittel (4) und die aktiven Komponenten (10) ferner dazu angeordnet sind, Punkte eines zusätzlichen optischen Feldes, welches sich auf derselben Seite der Lichttransmissionsmittel befindet wie die Durchgangsöffnung (3) des Lichtes, mit jeweiligen Punkten optisch zu konjugieren, welche sich außerhalb des und entfernt von dem Bauteil befinden auf einer von der ersten und der zweiten Seite des Bauteils.

2. Bauteil nach Anspruch 1, wobei das Adressiersystem (2) ferner derart angepasst ist, dass der reflektierende Zustand wenigstens einiger der aktiven Komponenten (10) intermittierend ist, mit einer endlichen Dauer des reflektierenden Zustand jeder aktiven Komponente und mit einer Änderungsfrequenz der aktiven Komponenten, welche umgeschaltet werden.

3. Bauteil nach Anspruch 1 oder 2, wobei die aktiven Komponenten (10) in der Fläche des Bauteils gemäß einer Matrixanordnung nebeneinander angeordnet sind.

4. Bauteil nach Anspruch 3, wobei die Lichttransmissionsmittel (4) selbst aktive Zwischenkomponenten (40) umfassen, von denen jede zwischen einem transparenten Einzelzustand und einem reflektierenden Einzelzustand umschaltbar ist, von denen jede zwischen der Lichtdurchgangsöffnung (3) und einem Endabschnitt einer Zeile oder einer Spalte der Matrixanordnung derart angeordnet ist, dass jede aktive Zwischenkomponente eine optische Verbindung zwischen der Durchgangsöffnung des Lichts und einer der aktiven Komponenten (10) der entsprechenden Spalte oder Zeile bilden kann, wenn die aktive Zwischenkomponente in dem reflektierenden Zustand ist.

5. Bauteil nach Anspruch 3 oder 4, wobei das Adressiersystem (2) dazu angepasst ist, gleichzeitiges Umschalten mehrerer aktiver Komponenten (10) anzuweisen, welche zu derselben Zeile oder zu derselben Spalte der Matrixanordnung gehören.

6. Bauteil nach einem der Ansprüche 1 bis 4, wobei das Adressiersystem (2) dazu angepasst ist, ein Umschalten einer einzigen aktiven Komponente (10) auf einmal anzuweisen.

7. Bauteil nach einem der vorhergehenden Ansprüche, wobei die aktiven Komponenten (10) mit verschiedenen Farben durch Gruppen von wenigstens drei benachbarten aktiven Komponenten assoziiert sind.

8. Bauteil nach einem der vorhergehenden Ansprüche, wobei wenigstens einige der aktiven Komponenten (10) Abmessungen von kleiner als 2 mm, sogar kleiner als 0,5 mm, parallel zu der Fläche des Bauteils aufweisen.

9. Bauteil nach einem der Ansprüche 1 bis 8, wobei wenigstens einige der aktiven Komponenten (10) jeweils einen Abschnitt auf Grundlage von nematischen Flüssigkristallen und zwei Elektrodenabschnitte (11, 12) umfassen, welche mit dem Adressiersystem (2) verbunden sind und derart angeordnet sind, eine Orientierung der nematischen Flüssigkristalle zu verändern, wobei die Orientierungsveränderung dazu angepasst ist, ein Umschalten der entsprechenden aktiven Komponente zu erzeugen.

10. Bauteil nach einem der Ansprüche 1 bis 8, wobei wenigstens einige der aktiven Komponenten (10) jeweils einen Abschnitt auf Grundlage von cholesterischen Flüssigkristallen und zwei Elektrodenabschnitte (11, 12) umfassen, welche mit dem Adressiersystem (2) verbunden sind und derart angeordnet sind, eine Orientierung der cholesterischen Flüssigkristalle zu verändern, wobei die Orientierungsveränderung dazu angepasst ist, ein Umschalten der entsprechenden aktiven Komponente zu erzeugen.

11. Bauteil nach Anspruch 10, wobei der Abschnitt von cholesterischen Flüssigkristallen einiger der aktiven Komponenten (10) eine variable Helixlänge in dem reflektierenden Zustand der entsprechenden aktiven Komponente aufweist.

12. Bauteil nach einem der Ansprüche 1 bis 8, wobei wenigstens einige der aktiven Komponenten (10) jeweils in einer Matrix zerstreute Flüssigkristalltröpfchen und zwei Elektrodenabschnitte (11, 12) umfassen, welche mit dem Adressiersystem verbunden sind und derart angeordnet sind, eine Orientierung der Flüssigkristalle in jedem Tröpfchen zu verändern, wobei die Orientierungsveränderung innerhalb der Tröpfchen dazu angepasst ist, ein Umschalten der entsprechenden aktiven Komponente zu erzeugen.

13. Bauteil nach einem der Ansprüche 1 bis 8, wobei wenigstens einige der aktiven Komponenten (10) jeweils einen Wellenleiterabschnitt (13) und einen transparenten Seitenabschnitt (14) umfassen, welcher in Kontakt mit dem Wellenleiterabschnitt steht, wobei der Seitenabschnitt einen Brechungsindex aufweist, der zwischen zwei Werten variabel ist, welche kleiner und größer bzw. gleich dem Wert des Brechungsindex des Wellenleiters sind.

14. Transparente Vorrichtung zur Überlagerung von Bildern, umfassend:
- ein transparentes Bauteil (100) nach einem der Ansprüche 1 bis 13; und
- eine Lichtquelle (5), welche dazu angeordnet ist, Licht durch die Durchgangsöffnung des Bauteils (3) hindurch derart zu erzeugen, dass das Licht von wenigstens einer der aktiven Komponenten (10) zu der zweiten Seite des transparenten Bauteils hin derart reflektiert werden kann, dass ein zweites Bild eines in dem zusätzlichen optischen Feld befindlichen Motivs gebildet wird, wobei das zweite Bild von der zweiten Seite des Bauteils sichtbar ist und dem ersten Bild überlagert erscheint.

15. Vorrichtung zur Überlagerung von Bildern nach Anspruch 14, wobei das Adressiersystem (2) dazu angepasst ist, aufeinanderfolgendes Umschalten von verschiedenen aktiven Komponenten derart anzuweisen, dass das zweite Bild durch Abtasten der aktiven Komponenten erzeugt wird, und
wobei die Dauer des reflektierenden Zustands jeder aktiven Komponente und die Frequenz einer Veränderung der aktiven Komponenten, welche umgeschaltet werden, derart angepasst sind, dass das zweite Bild für einen Benutzer der Vorrichtung durchgehend erscheint.

16. Vorrichtung zur Überlagerung von Bildern nach Anspruch 15, wobei die Dauer des reflektierenden Zustands jeder aktiven Komponente (10) und die Frequenz einer Veränderung der aktiven Komponenten, welche umgeschaltet werden, dazu angepasst sind, dass das zweite Bild für einen Benutzer der Vorrichtung, der das erste und das zweite Bild mit dem bloßen Auge betrachtet, durchgehend erscheint.

17. Vorrichtung zur Überlagerung von Bildern nach einem der Ansprüche 14 bis 16, wobei wenigstens einige der aktiven Komponenten (10) jeweils in einer Matrix der aktiven Komponente zerstreute Flüssigkristalltröpfchen und zwei Elektrodenabschnitte (11, 12) umfassen, welche mit dem Adressiersystem (2) verbunden sind und derart angeordnet sind, eine Orientierung der Flüssigkristalle in jedem Tröpfchen zu verändern, wobei die Orientierungsveränderung innerhalb der Tröpfchen dazu angepasst ist, ein Umschalten der entsprechenden aktiven Komponente zu erzeugen, und wobei eine Art, eine Orientierung oder/und eine Verteilung der Tröpfchen in der Matrix der entsprechenden aktiven Komponente ferner dazu angepasst ist, eine Bildung des zweiten Bildes zu verändern.

18. Vorrichtung zur Überlagerung von Bildern nach Anspruch 17, wobei eine Art, eine Orientierung oder/und eine Verteilung der Tröpfchen in der Matrix der entsprechenden aktiven Komponente ferner derart angepasst ist, dass Lichtstrahlen, welche von verschiedenen aktiven Komponenten reflektiert werden, im Wesentlichen durch einen gemeinsamen Punkt verlaufen, welcher sich an der zweiten Seite des Bauteils befindet.

19. Vorrichtung zur Überlagerung von Bildern nach einem der Ansprüche 14 bis 18, wobei die aktiven Komponenten (10) dazu angepasst sind, das zweite Bild in einer Ebene zu erzeugen, welche einer Ebene zur Bildung des ersten Bildes überlagert ist, wenn die Szene, welche dem ersten Bild entspricht, von dem Bauteil entfernt ist.

20. Vorrichtung zur Überlagerung von Bildern nach einem der Ansprüche 14 bis 19, ferner umfassend:
- einen Erzeuger von Abschnitten des zweiten Bildes (6), der in dem zusätzlichen optischen Feld angeordnet ist und mit dem Adressiersystem (2) verbunden ist, wobei der Erzeuger dazu angepasst ist, einen Abschnitt des zweiten Bildes ausgehend von dem von der Quelle (5) erzeugten Licht zu bilden,
und wobei das Adressiersystem (2) ferner dazu angepasst ist, den Erzeuger (6) anzuweisen, aufeinanderfolgend Abschnitte des zweiten Bildes gemäß einer festgelegten Ordnung zu bilden, und um synchronisiertes Umschalten der aktiven Komponenten (10) gemäß derselben Ordnung in der Fläche des Bauteils (100) derart anzuweisen, dass jeder Abschnitt des zweiten Bildes von einer aktiven Komponente reflektiert wird und dass das zweite Bild auf der zweiten Seite des Bauteils rekonstruiert erscheint.

21. Vorrichtung zur Überlagerung von Bildern nach Anspruch 20, wobei der Erzeuger von Abschnitten des zweiten Bildes (6) Bildpunkte umfasst, von denen jeder eine in variabler Weise modulierte Intensität aufweist.

22. Vorrichtung zur Überlagerung von Bildern nach einem der Ansprüche 14 bis 21, wobei sie eine optische Linse, ein Brillenglas, ein Deckglas oder ein Helmvisier bildet.

23. Vorrichtung zur Überlagerung von Bildern nach Anspruch 22, wobei sie ein Brillenglas bildet und wobei die aktiven Komponenten (10) ferner dazu angepasst sind, eine Fehlsichtigkeit eines Trägers des Glases zu korrigieren, wenn der Träger wenigstens eines von dem ersten und dem zweiten Bild betrachtet.

24. Sicht- und Bilderfassungsvorrichtung, umfassend
- ein transparentes Bauteil (100) nach einem der Ansprüche 1 bis 13;
- einen lichtempfindlichen Detektor (7), welcher in dem zusätzlichen optischen Feld angeordnet ist, um durch die Durchgangsöffnung des Bauteils (3) hindurch von der Szene stammendes und von wenigstens einer der aktiven Komponenten (10) reflektiertes Licht während einer Detektionsdauer zu empfangen, und
- eine Erfassungseinheit (8), welche mit dem Detektor auf eine Weise zur Erfassung von von dem Detektor empfangenen Lichtintensitäten verbunden ist,
wobei das Adressiersystem (2) ferner mit dem Detektor (7) und der Erfassungseinheit (8) in einer Weise in der Fläche des transparenten Bauteils zur Übertragung von Koordinaten einer aktiven Komponente (10) zu der Einheit verbunden ist, welche während der Detektionsdauer des Detektors in dem reflektierenden Zustand ist,
und wobei die Dauer des reflektierenden Zustands jeder aktiven Komponente und die Frequenz einer Veränderung der aktiven Komponenten, welche umgeschaltet werden, derart angepasst sind, dass das erste Bild, welches von dem Bauteil gebildet ist, für einen Benutzer der Vorrichtung durchgehend erscheint.

25. Sicht- und Bilderfassungsvorrichtung nach Anspruch 24, wobei der Detektor (7) eine Matrix lichtempfindlicher Komponenten umfasst.

26. Sicht- und Bilderfassungsvorrichtung nach Anspruch 24 oder 25, wobei sie eine optische Linse, ein Brillenglas, ein Deckglas oder ein Helmvisier bildet.

27. Sicht- und Bilderfassungsvorrichtung nach Anspruch 26, wobei sie ein Brillenglas bildet und ferner dazu angepasst ist, eine Fehlsichtigkeit eines Trägers des Glases zu korrigieren, wenn der Träger das erste Bild betrachtet.
